Europäisches Patentamt

(19) European Patent Office

Office européen des brevets

(11) Publication number : **0 453 420 A1**

(12) **EUROPEAN PATENT APPLICATION**

(21) Application number : 91830156.5

(22) Date of filing : 19.04.91

(51) Int. Cl.⁵ : **A01B 35/18, A01B 49/02, A01C 5/06**

(30) Priority : 20.04.90 IT 6322990 U

(43) Date of publication of application :
23.10.91 Bulletin 91/43

(84) Designated Contracting States :
AT DE ES FR

(71) Applicant : SODOTECH di Nicoletto Luisa & C.
s.d.f.
Via Stella, 5
I-45024 Fiesso Umbertiano (Rovigo) (IT)

(72) Inventor : Mantovani, Loris
Via Stella 10
IT-45024 Fiesso Umbertiano (Rovigo) (IT)
Inventor : Michelotto, Fausto
Via Poazzo Inferiore, 3/B
IT-45030 Occhiobello (Rovigo) (IT)

(74) Representative : Sarpi, Maurizio
Studio FERRARIO Via Collina, 36
I-00187 Roma (IT)

(54) Item of farm machinery for the preparation of hard-packed soil for seeding, with utensils whose angle can be adjusted.

(57)    The item of equipment in question includes utensils that make it possible to clean the strip of terrain to be seeded of residue from the previous crop, and adequately prepare the terrain for seeding that can be carried out using any type of seed-drill that can be attached to the rear of the item.

In substance, the aforementioned item of equipment consists of a horizontal support framework (2) to which several identical assemblies (3) are attached at a certain distance from each other.

Each assembly includes a tilling plowshare (4) attached to a sprung device (5), two sod-breaker discs (6) attached to the sides of the plowshare, and a rotating cleaner disc (7) with flexible elements (13) attached in front of the plowshare in respect of its direction of travel, on a parallelogram shaped support (9).

The sod-breaker discs (6) are attached to a support (8) that can be directly attached to the plowshare holder arm (4'), or on a shock-absorber (16) placed between the arm (4') and the support (8), which makes it possible for the sod-braker discs (6) to have a certain degree of independence in respect of the plowshare holder arm, so that they can ride over any residue from the previous crop, and preventing the discs themselves from becoming obstructed.

EP 0 453 420 A1

fig. 1

The present patent for an invention regards an item of agricultural equipment designed to work hard-packed soil, and to be coupled to any type of mechanical or compressed-air operated seed-drill attached to its rear, and including perfected means for cleaning and breaking up the strip of soil to be seeded.

The invention is question has been designed and prepared for:

1) - Improving the quality of soil during the stages of seeding, and overcoming several disadvantages found in known solutions.

2) - Increasing production whilst using tractors whose average power is 70/100 HP.

3) - Reducing costs in respect of existing solutions.

Currently, in field of agricultural soil working, there are items of equipment with several lines of rotating blades, that are not only expensive but require powerful tractors, and seed-drills that are fitted with particularly robust seeding elements that cut the soil and drop seeds into the cut, with the disadvantage, however, that they do not clean the strip being worked of vegetable residue from the previous crop, nor do they adequately prepare the soil for seeding.

The present invention proposes an item of equipment that resolves these problems, in as much as the combination of utensils held by the item clean the strip of soil being seeded of vegetable residue from the previous crop using suitable circular toothed discs, and adequately prepares the strip of soil using tilling plowshares and sod-breaker discs.

Its simple characteristics, due to the absence of moving parts such as drive chains, drive shafts, and gears in oil sumps, together with the fact that it can be coupled to any type of compressed-air operated or mechanical seed-drill, mean that the costs of the item of equipment in question, not only the purchase cost and the fact that it can be used with medium powered tractors, but also its low maintenance costs, make it within the reach of small and medium size farms.

The invention actually refers to an item of equipment for working and preparing agricultural terrain, designed to be coupled to a seed-drill or similar item, characterized by the fact that it consists of a framework that supports a series of utensil assemblies, set at regular intervals; each of the aforementioned assemblies including a tilling plowshare combined with a pair of sod-breaker discs, and a rotating cleaner disc placed in front of the aforementioned plowshare in the direction it travels.

The invention can be better understood by the description that follows, which is an example and not limiting, and the attached drawing, in which:

Figure 1 is a schematic side perspective view of the invention in its entirety:

Figure 2 is a schematic perspective view of the front side:

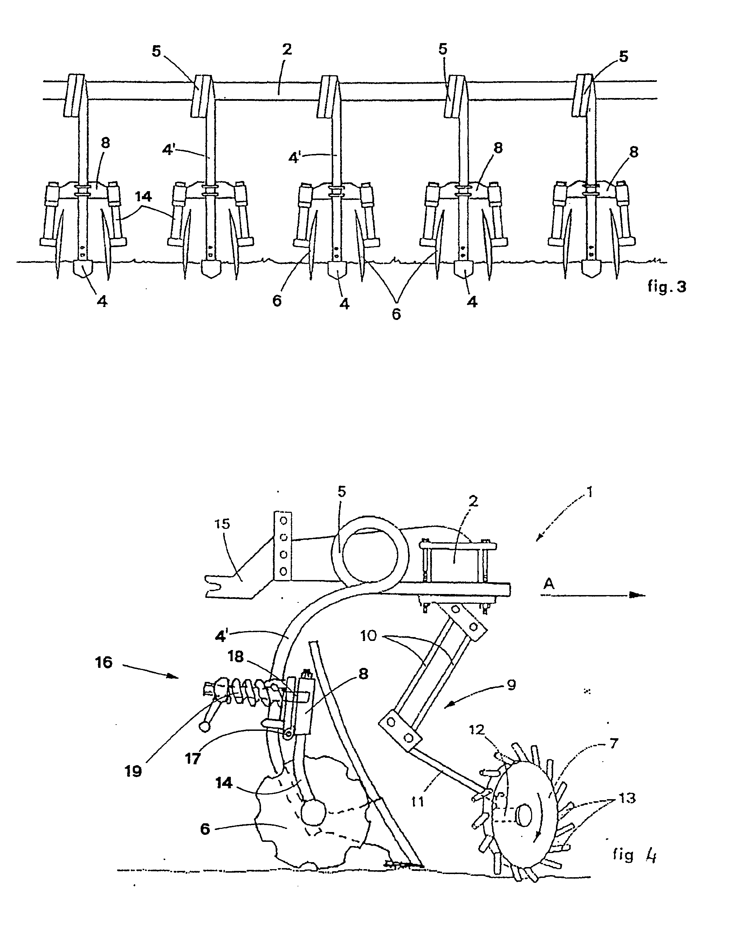

Figure 3 is a schematic view of the rear side; and

Figure 4 is a schematic side view of a possible variant to the invention.

With reference to the attached Figures, the entire item of agricultural machinery (1) according to the invention mainly consists of a horizontal support framework (2). On which several identical assemblies (3) are mounted at a certain distance from each other.

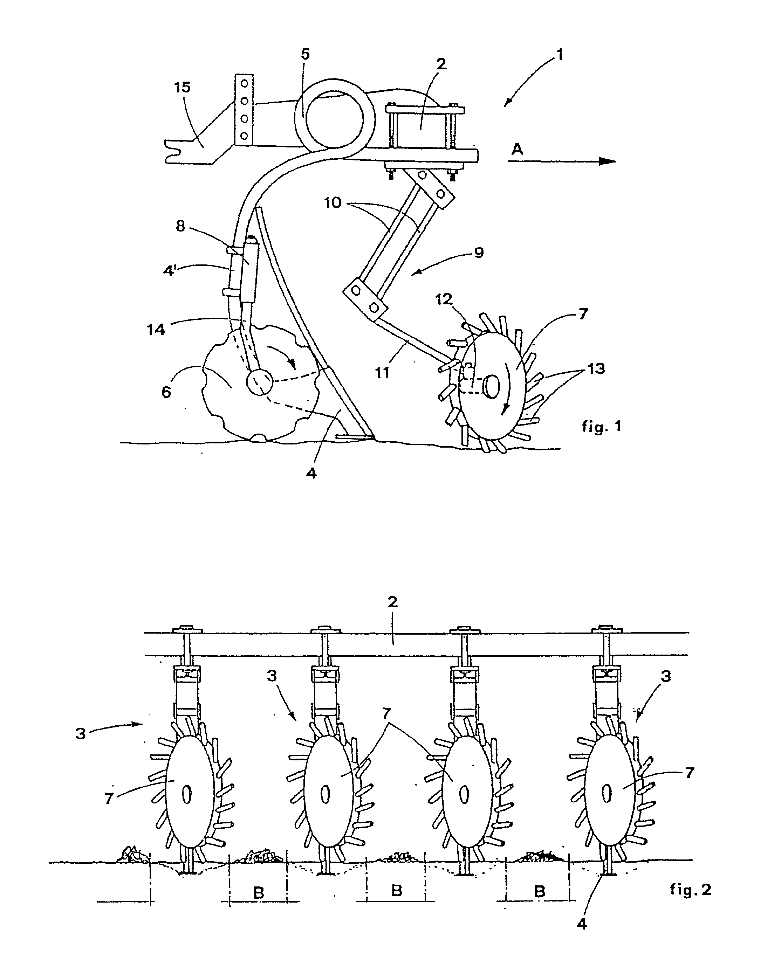

Each assembly (3) includes a tilling plowshare (4) for cutting the soil, attached to a sprung device (5), a pair of sod-breaker discs (6) mounted on the plowshare, and a rotating cleaner disc (7) placed in front of the plowshare (4) in its direction of travel (shown by arrow A in Figure 1).

The plowshare (4) and the sod-breaker discs (6) form an assembly that is independent of the cleaner disc (7). In fact, whereas the discs (6) are mounted on a particular support (8) attached to the plowshare holder arm (4'), the cleaner disc (7) is mounted on a support (9) consisting of parallelogram shaped arms (10) and a rod (11) that holds the cleaner disc itself.

The cleaner disc (7) consists of a circular disc freely mounted on the arm (11) via an adjustable support (12), and includes a series of flexible elements (13) along its outer rim, that are made of, for example, rubber, or metal, or another material.

The support (12), which includes a vertical pin, makes it possible to adjust the horizontal angle of the cleaner disc (7), whilst its vertical position is kept constant.

The pair of arms (10) make it possible for the cleaner disc (7) to absorb shocks due to unevenesses in the soil. In fact, they permit a certain amount of vertical movement of the piece which remains constantly in contact with the terrain, also due to the action of countering means (a spring, for example) (not shown).

The angle the cleaner disc (7) can take up whilst the item of equipment advances is shown in Figures 1 and 2, positions that make it possible for the flexible elements (13) that make contact with the soil to remove any traces of the previous crop, weeds, scrub, or other fibrous matter from the strip being seaded that might prevent the soil from being worked by the plowshare and seed-drill.

In fact, while the cleaner disc is rotating, the flexible elements (13) move any waste material to the side where it collects into intermediate strips between the parallel strips being seeded (In Figure 2, these intermediate waste material collection strips are indicated by B).

The plowshare therefore digs a furrow in a strip that has already been cleaned and is therefore suitable for receiving the seeding that follows.

The sod-breaker discs (6), however, are designed to break up the soil tilled by the plowshare and finish preparing the terrain for seeding. They are mounted as described on a support (8) attached to the plowshare holder arm (4') in such a way that they can be adjusted to a certain angle in height and horizontally to the direction of travel. In fact, the sod-breaker discs are attached to the supports (8) via adjustment shafts (14) on a vertical axis that are bent at a certain angle making it possible to vary the distance between the sod-breaker discs and the plowshare.

The rubber-like composition of the flexible elements (13), and their angled positioning on the rim of the disc (7) to which they are attached, make it possible for the waste material present on the terrain to be easily removed and deposited in the intermediate strips that are not to be seeded, but other compositions, for example metallic ones, can be used for the flexible elements (13), that achieve the same results.

The item of equipment described is fitted with a three point coupling for connection to any type of tractor, and is designed so that it can be coupled to any type of compressed-air operated or mechanical seed-drill, which is attached to the rear of the item itself via horizontally and vertically adjustable quick-connect couplings (15). Seeding can therefore take place at the same time as preparation of the soil.

Advantageously, according to a possible variant (shown in Figure 4), the support (8) holding the discs (6) can be attached to the plowshare holder arm (4') with a shock-absorber (indicated in its entirety by (6).

This shock-absorber, that can be applied between the arm (4) and the support (8), consists of a hinged pin (17) that makes it possible for the support (8) to be moved on a shaft (18) against the action of a spring (19).

This makes it possible for the sod-breaker discs (6) to have a certain degree of independence in respect of the plowshare holder arm (4'), so that the soil can be worked in a more uniform fashion by the discs, and so that they can rise over any residues from the previous crop, also preventing the discs from being clogged or obstructed.

## Claims

1) Item of equipment, for working and preparing agricultural terrain, designed to be coupled to a seed-drill or similar item, characterized by the fact that it consists of a framework (2) supporting several series of utensils (3), represented by a tilling plowshare (4), coupled with a pair of sod-breaker discs (6), and a circular cleaner disc (7) placed in front of the aforementioned plowshare in the direction of travel.

2) Item of equipment as per the previous Claim, characterized by the fact that the aforementioned cleaner disc (7) is freely mounted on a jointed support (9) with parallel arms (10) shaped like a parallelogram, and including a series of flexible elements (13) made of, for example, rubber or metal, along its outer rim.

3) Item of equipment as per the previous Claims, characterized by the fact that the aforementioned jointed support (9) includes means that can horizontally adjust the aforementioned cleaner disc (7), whilst keeping its vertical position constant.

4) Item of equipment as per the previous Claims, characterized by the fact that the aforementioned tilling plowshare (4) is attached to a sprung device (5) that can be horizontally adjusted.

5) Item of equipment as per the previous Claims, characterized by the fact, that the aforementioned pair of sod-breaker discs (6) are attached to an elastic support or arm (4') on the plowshare, via a coupling (8) including shafts (14) that are adjustable to a certain angle in height and horizontally to the terrain and direction of travel, and in respect of the distance from the plowshare.

fig. 1

fig. 2

EP 0 453 420 A1

fig. 3

fig 4

European Patent
Office

**EUROPEAN SEARCH REPORT**

Application Number

EP    91 83 0156

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y<br>A | US-A-4 762 181 (COX)<br><br>* column 2, line 31 - column 4, line 24; figures 1-8 *<br>---- | 1<br>5 | A01B35/18<br>A01B49/02<br>A01C5/06 |
| Y<br><br>A | US-A-4 785 890 (MARTIN)<br>* column 6, line 39 - column 8, line 46; figures 1-9 *<br><br>---- | 1<br><br>2,3 | |
| A | US-A-4 550 122 (DAVID)<br>* column 3, line 14 - column 4, line 24; figures 1-7 *<br>--- | 1,3,5 | |
| A | US-A-3 082 829 (BUDDINGH)<br>* column 2, line 47 - column 6, line 74; figures 1-11 *<br>--- | 1,2,3 | |
| A | US-A-3 796 269 (CARLUCCI)<br>* column 4, line 49 - column 5, line 14; figures 1,2,3,6-8 *<br>----- | 1,2 | TECHNICAL FIELDS SEARCHED (Int. Cl.5 )<br><br>A01B<br>A01C |

| The present search report has been drawn up for all claims | | |
|---|---|---|
| Place of search<br>THE HAGUE | Date of completion of the search<br>10 JULY 1991 | Examiner<br>VERMANDER R.H. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P0401)